# EUROPÄISCHE PATENTSCHRIFT

(11) **EP 2 349 631 B1**
(45) Veröffentlichungstag und Bekanntmachung des Hinweises auf die Patenterteilung: **16.09.2015**
(21) Anmeldenummer: 09805901.7
(22) Anmeldetag: 23.10.2009
(51) Int. Cl.: B23K 10/00, B23K 10/02, B23K 26/20, B23K 26/38, B23P 23/02, H05H 1/24, B23K 26/14, F23D 14/52

(54) **SYSTEM ZUR THERMISCHEN BEARBEITUNG VON WERKSTÜCKEN**
SYSTEM FOR THERMALLY PROCESSING WORKPIECES
SYSTÈME D'USINAGE THERMIQUE DE PIÈCES

(30) Priorität: 25.10.2008 DE 102008056278
(43) Veröffentlichungstag der Anmeldung: 03.08.2011
(73) Patentinhaber: Kjellberg Finsterwalde Plasma und Maschinen GmbH, 03238 Finsterwalde (DE)
(72) Erfinder: KRINK, Volker, 03238 Finsterwalde (DE); BACH, Friedrich-Wilhelm, 30916 Isernhagen (DE); LAURISCH, Frank, 03238 Finsterwalde (DE); RÜMENAPP, Thomas, 30457 Hannover (DE)
(74) Vertreter: Pfenning, Meinig & Partner GbR
(86) Internationale Anmeldenummer: PCT/DE2009/001540
(87) Internationale Veröffentlichungsnummer: WO 2010/045943

(56) Entgegenhaltungen:
- DE-C1- 4 235 592
- JP-A- 7 328 879
- JP-A- 2001 025 873
- US-A- 5 168 610
- US-B1- 6 374 158

## Beschreibung

Die Erfindung betrifft ein System zur thermischen Bearbeitung von Werkstücken gemäß dem Oberbegriff des Anspruchs 1 (Siehe, z.B., US 5 168 610). Dabei können Werkstücke mit einem Plasmastrahl oder einem Laserstrahl bear-beitet werden. Sie kann bevorzugt zur trennenden Bearbeitung, also zum Schneiden aber auch zum Schweißen von Werkstücken eingesetzt werden.

Die Bearbeitung mit Plasma ist sehr produktiv und es können beispielsweise metallische Werkstücke im Dickenbereich 1 bis 60 mm für Baustähle und 1 bis 160 mm für Aluminium und CrNi-Stähle wirtschaftlich getrennt werden. Dabei wird ein Plasma durch einen Lichtbogen, der ein stark erhitztes und elektrisch leitfähiges Gas generiert und durch eine Düse eingeschnürt auf ein zu bearbeitendes Werkstück gerichtet. Mittels der thermischen und kinetischen Energie wird der Werkstoff aufgeschmolzen und aus der gebildeten Schnittfuge ausgetrieben. In der jüngsten Vergangenheit konnte die Schnittqualität deutlich verbessert werden. Lediglich die Berücksichtigung filigraner Konturen, also die Berücksichtigung großer Veränderungen der Vorschubachsrichtung mit kleinen Durchmessern bereitet Probleme. So können Löcher, mit Radien kleiner 5 mm oder die kleiner als die 1,5-fache Dicke eines Werkstückes sind, beim Schneiden mit Plasma nicht in hoher Qualität realisiert werden.

Eine Bearbeitung mit Laserstrahlung erreicht beim Schneiden im unteren Werkstückdickenbereich (< 10 mm) eine bessere Schnittqualität. Es können kleinere Schnittfugen und scharfe Kanten mit sehr kleinen Radien ausgebildet werden. Bei größeren Werkstückdicken ist die Produktivität deutlich geringer und ab einer Dicke von einigen Zentimetern ist eine Bearbeitung nicht mehr möglich.

Beim Schneiden ist ab Werkstückdicken von 5 mm aufwärts eine Bearbeitung mit Plasma kostengünstiger, schneller und hat oftmals eine höhere Qualität.

Mit der Einführung von Faserlasern in die Produktion, bei denen die Laserstrahlung über Lichtwellenleiter geführt wird, ist die Strahlführung wesentlich vereinfacht.

Sowohl die Plasmatechnik, als auch die Lasertechnik können jeweils in Verbindung mit CNC-gesteuerten Führungssystemen, z.B. Koordinatenführungssysteme oder Industrieroboter, automatisiert eingesetzt werden. Dabei sind ein erhöhter anlagentechnischer Aufwand und/oder ein Neuspannen von Werkstücken in einer jeweils anderen Anlage zur Bearbeitung erforderlich, wenn beide Bearbeitungsverfahren an einem Werkstück durchgeführt werden sollen.

Die US 5 168 610 A betrifft D1 eine komplexe Werkzeugmaschine, bei der neben einem Stanzwerkzeug auch eine Plasmabearbeitungseinheit vorhanden sein soll. In D1 werden außerdem andere Elemente, die zu einer Werkstückbearbeitung eingesetzt werden können, genannt. Dies sind konkret eine Bohreinheit, eine Absticheinheit und eben auch ein Laserbearbeitungskopf.

Die JP 07 328879 A betrifft eine zusätzliche mögliche Laserbearbeitung an einer Werkzeugmaschine. Dabei soll die Laserstrahlung über optische Fasern von der Laserquelle zu einem Laserwerkzeug geführt werden.

In US 6 374 158 B1 ein gemeinsames Schaftelement in das sowohl die Plasmadüse, wie auch ein Laserpointer, als Laserquelle, eingesetzt werden können.

Es ist daher Aufgabe der Erfindung die thermische Bearbeitung von Werkstücken flexibler und dabei auch kostengünstiger zu ermöglichen.

Erfindungsgemäß wird diese Aufgabe mit einem System, das die Merkmale des Anspruchs 1 aufweist, gelöst. Vorteilhafte Ausgestaltungen und Weiterbildungen können mit in untergeordneten Ansprüchen bezeichneten Merkmalen erreicht werden.

Bei der Erfindung kann auf an sich bekannte technische Elemente zurückgegriffen werden, die jedoch etwas modifiziert werden sollen. Sc können Plasmabearbeitungsköpfe und Laserbearbeitungsköpfe eingesetzt werden, deren prinzipieller Aufbau den bisher eingesetzten entspricht. Dabei kann eine Anpassung insbesondere für Laserbearbeitungsköpfe auch berücksichtigen, ob sie zum Schweißen oder Schneiden eingesetzt werden sollen, da für das Schneiden eine Zufuhr von Schneidgas/Prozessgas erforderlich ist, das durch eine Düse auf das Werkstück zum Austreiben von Schmelze aus der Schnittfuge erforderlich ist.

Prozessgas ist aber auch zum Betreiben eines Plasmabearbeitungskopfes erforderlich. Dadurch kann ein gemeinsamer Zugriff beider Komponenten auf eine gemeinsam nutzbare Gasversorgung bei der Erfindung ausgenutzt werden.

Ein erfindungsgemäßes System ist dabei so ausgebildet, dass ein Laserbearbeitungskopf und ein Plasmabearbeitungskopf mit einem einzigen Schaftelement verbunden werden können. Es sind dabei im Schaftelement mindestens eine Zuführung für den elektrischen Strom zu einer Elektrode im Plasmabearbeitungskopf, ein Lichtwellenleiter für Laserstrahlung und eine Zuführung für Prozessgas vorhanden. Diese können mit komplementären Anschlüssen oder Elementen, die am Plasmabearbeitungskopf und am Laserbearbeitungskopf vorhanden sind, im befestigten Zustand am Schaftelement jeweils miteinander kommunizieren oder in Verbindung stehen. Dabei sind die Zuführungen an eine Versorgung für elektrischen Strom, für Prozessgas und der Lichtwellenleiter ist an eine Laserlichtquelle angeschlossen.

Das Schaftelement kann an einem Führungssystem befestigt sein, wie dies aus dem Stand der Technik bekannt ist. Es ist so ausgebildet, dass ein Plasmabearbeitungskopf und ein Laserbearbeitungskopf daran befestigt werden können, aber ein Austausch der unterschiedlichen Bearbeitungsköpfe einfach und schnell möglich ist. Dies kann mit geeigneten Schnellwechselverschlüssen erreicht werden. Ein Austausch kann so beim Wechsel der Bearbeitung oder bei aufgetretenem Verschleiß einfach und schnell realisiert werden. Neben dem gemeinsamen Führungssystem, einer einzigen Werkstückspanneinrichtung können aber auch andere Anlagenkomponenten, wie insbesondere Gasversorgung oder auch ein zusätzliches Kühlsystem für beide Bearbeitungsarten gemeinsam, die am erfindungsgemäßen System vorhanden sind bzw. vorhanden sein können, genutzt werden. Dabei kann ein Kühlsystem so ausgebildet sein, dass lediglich bei einer Bearbeitung mit Plasma oder mit Laserstrahlung eine zusätzliche Kühlung erfolgt. Bevorzugt wird dies die Bearbeitung mit Plasma sein. Dabei können das Schaftelement und die unterschiedlichen Bearbeitungsköpfe entsprechend ausgebildet sein, so dass ein Kühlmittel lediglich in einen der beiden unterschiedlichen Bearbeitungsköpfe ein- und wieder zurückströmen kann.

Es ist eine Laserlichtquelle mit kleinerer Leistung erforderlich, da ja auch mit Plasma gearbeitet werden kann, wenn höhere Leistungen erforderlich sind.

Es können die unterschiedlichsten Werkstoffe und Werkstücke mit unterschiedlicheren Dicken mit der Erfindung bearbeitet werden. Die Kosten für Anlagentechnik können reduziert und die Produktivität erhöht werden, da die Vorteile der beiden unterschiedlichen Bearbeitungsverfahren ausgenutzt werden können.

Es besteht auch die Möglichkeit die Prozessgaszuführung so zu gestalten, dass ein Sekundärgas mit zugeführt werden kann.

Nachfolgend soll die Erfindung an Hand von Beispielen näher erläutert werden.

Dabei zeigen:
Figur 1 in schematischer Form, den Aufbau eines Beispiels eines erfindungsgemäßen Systems;
Figur 2 Möglichkeiten für die Ausbildung eines Schaftelementes, eines Plasmabearbeitungskopfes und eines Laserbearbeitungskopfes ohne Kühlung;
Figur 3 Möglichkeiten für die Ausbildung eines Schaftelementes, eines Plasmabearbeitungskopfes und eines Laserbearbeitungskopfes mit Kühlung;
Figur 4 in schematischer Form, den Aufbau eines weiteren Beispiels eines erfindungsgemäßen Systems;
Figur 5 in schematischer Form, den Aufbau eines weiteren Beispiels eines erfindungsgemäßen Systems;
Figur 6 in schematischer Form, den Aufbau eines weiteren Beispiels eines erfindungsgemäßen Systems;
Figur 7 in schematischer Form, den Aufbau eines weiteren Beispiels eines erfindungsgemäßen Systems und
Figur 8 in schematischer Form, den Aufbau eines weiteren Beispiels eines erfindungsgemäßen Systems.

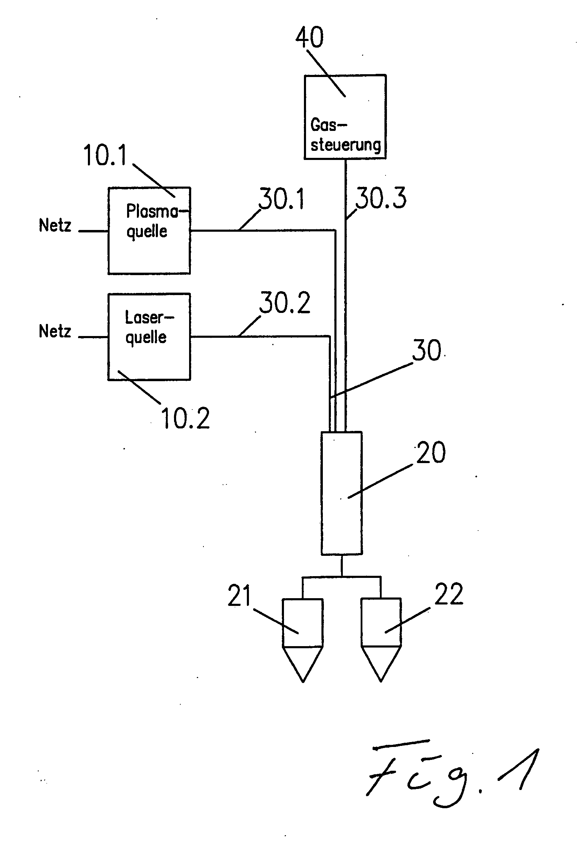

Mit Figur 1 soll in schematischer Form ein einfaches Beispiel eines erfindungsgemäßen Systems ohne zusätzliche Kühlung verdeutlicht werden.

Dabei sind eine Plasmaquelle 10.1 und ein Faserlaser als Laserlichtquelle 10.2 an eine elektrische Spannungsversorgung (Netz) angeschlossen. Ein Schaftelement 20 ist über Zuführungen 30.1 an eine Plasmaquelle 10.1 angeschlossen, über die in einem Plasmabearbeitungskopf 21 vorhandene nicht dargestellte Elektrode mit elektrischem Strom verscrgt werden kann. Über einen Lichtwellenleiter 30.2 gelangt emittierte Laserstrahlung zum Schaftelement 20. Prozessgas wird über die Leitung 30.3 von einer Gassteuerung 40 zugeführt. Es kann ein gemeinsames Schlauch- oder Leitungspaket 30 mit den Leitungen 30.1, 30.2 und 30.3 gebildet werden.

Am Schaftelement 20 wird gemäß der Erfindung wahlweise ein Plasmabearbeitungskopf 21 oder ein Laserbearbeitungskopf 22 befestigt. Dabei wird bei einem so ausgebildeten System die Prozessgassteuerung und -führung bei beiden Verfahren gemeinsam genutzt**.** Es werden lediglich die jeweils erforderlichen Prozessgasdrücke und -volumenströme berücksichtigt.

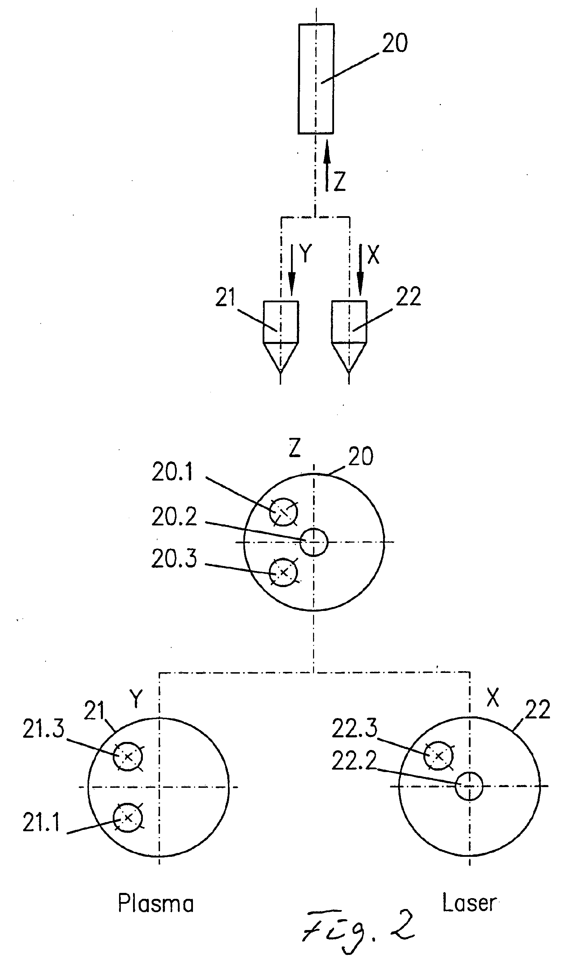

Mit Figur 2 sollen mögliche Ausbildungen von Schaftelement 20, Plasmabearbeitungskopf 21 und Laserbearbeitungskopf 22, wie sie bei einem System nach Figur 1 bzw. ein System ohne zusätzliche Kühlung eingesetzt werden können, verdeutlicht werden.

Dabei gibt die obere Darstellung die drei Komponenten 20, 21 und 22 wieder. In der Mitte ist mit Z bezeichnet, eine Ansicht von unten bzw. der Seite des Schaftelementes 20 gezeigt, an der Plasmabearbeitungskopf 21 bzw. Laserbearbeitungskopf 22 an ihm befestigt werden können.

Durch die mittlere Längsachse ist der Lichtwellenleiter 20.2 für die Laserstrahlung geführt. Außerdem sind die Zuführung 20.1 für elektrischen Strom für den Plasmabetrieb und die Zuführung 20.3 von Prozessgas durch das Schaftelement 20 zu den Bearbeitungsköpfen 21 bzw. 22 ausgebildet.

Unten links und rechts sind Ansichten von der Seite der beiden Bearabeitungsköpfe 21 und 22 gezeigt, mit der diese am Schaftelement 20 befestigt werden können. Dabei sind der Lichtwellenleiter 22.2, die Zuführungen 21.1 und 21.3 so angeordnet und ausgerichtet, dass eine Verbindung gewährleistet und die jeweiligen Medien durch diese zum jeweiligen Bearbeitungskopf 21 oder 22 geführt werden können.

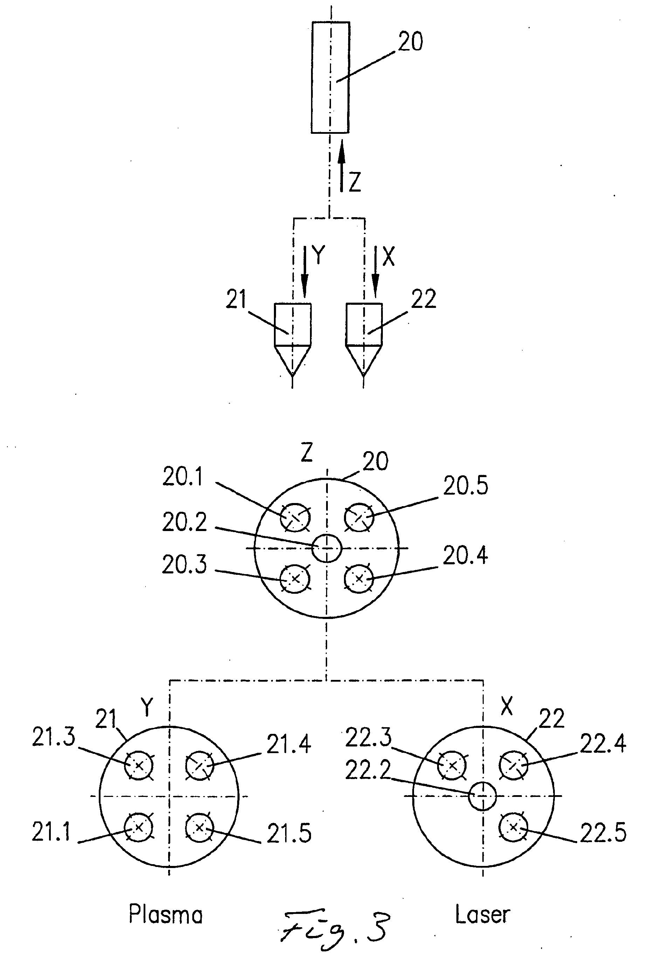

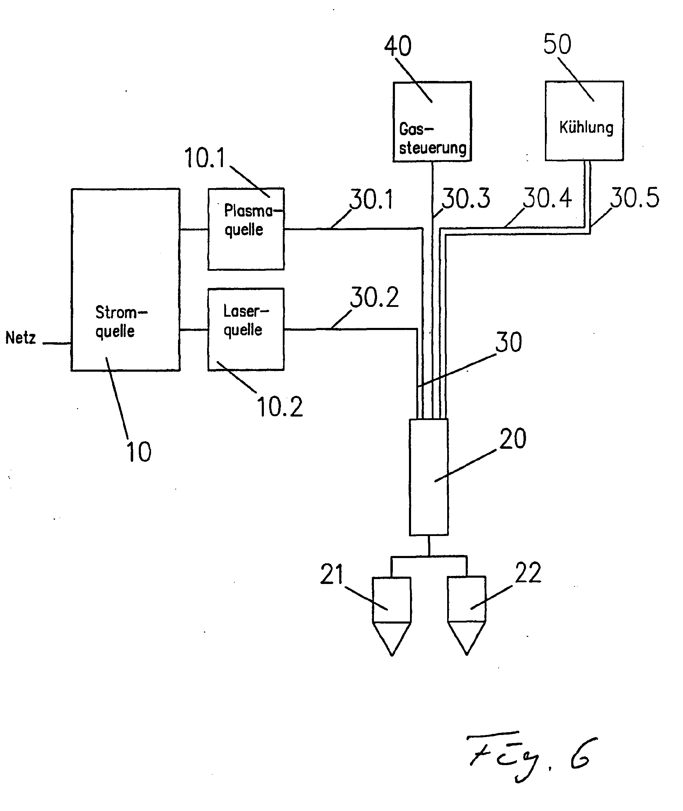

Die Darstellung von Figur 3 entspricht in wesentlichen Punkten, der Figur 2. Es sind aber modifizierte Bearbeitungsköpfe 21 und 22 und ein modifiziertes Schaftelement 20 gezeigt, wie sie bei den nachfolgend bzgl. der in den Figuren 6 bis 8 gezeigten Systemen einsetzbar sind, da hier eine zusätzliche Kühlung vorgesehen ist.

Die gleichen Elemente sind mit gleichen Bezugszeichen versehen. Durch das in der Mitte dargestellte Schaftelement 20 sind bei diesem Beispiel zusätzlich eine Zuführung 20.4 und eine Rückführung 20.5 für ein Kühlmittel durch das Schaftelement 20 hindurch in den jeweiligen Bearbeitungskopf 21 oder 22 hinein und wieder zurück zu einem Kühlsystem 50, das bevorzugt als Rückkühlsystem ausgebildet sein kann, geführt werden kann, vorhanden. Durch eine Kühlung kann der Verschleiß beim Betrieb reduziert werden.

Die Zuführung 20.4 kann in die Kühlmittelleitung 21.4 des Plasmabearbeitungskopfes 21 oder die Kühlmittelleitung 22.4 des Laserbearbeitungskopfes 22 und die Rückführung 20.5 in die Kühlmittelleitungen 21.5 oder 22.5 des jeweiligen am Schaftelement 20 befestigten Bearbeitungskopfes 21 oder 22 münden.

Es besteht auch die Möglichkeit, eine Zuführung 20.1 21.1 für elektrischen Strom so auszubilden und anzuordnen, dass sie innerhalb eines Kanals oder einer Zu- bzw. Rückführung 20.4, 21.4, 20.5 oder 21.5 für Kühlmittel geführt und dabei mit gekühlt werden kann. Durch eine Kühlung kann der Querschnitt eines eingesetzten elektrischen Leiters bei vergleichbarem durch ihn fließenden elektrischen Strömen ohne Kühlung reduziert werden.

Nicht dargestellt sind die weitere Ausbildung der beiden Bearbeitungsköpfe 21 und 22. Diese können, wie herkömmliche ausgebildet sein. Also am Plasmabearbeitungskopf 21 die Elektroden und Düsen entsprechend angeordnet bzw. vorhanden sein.

Am Laserbearbeitungskopf 22 kann ein den auf ein Werkstück gerichteten Laserstrahl fokussierendes bzw. formendes optisches Element vorhanden sein. Dieser kann auch mit einer Schneiddüse versehen sein, wenn ein Schneiden an Werkstücken damit vorgenommen werden soll.

Ein erfindungsgemäßes System kann auch so weitergebildet sein, dass automatisch erkannt wird, was für ein Bearbeitungskopf 21 oder 22 im Moment am Schaftelement 20 befestigt ist, so dass dies für die Steuerung oder Regelung des Bearbeitungsprozesses berücksichtigt werden kann und Fehlbedienungen vermieden werden können. Hierzu kann ein sensitives Element vorhanden sein, das am Schaftelement 20 und/oder den unterschiedlichen Bearbeitungsköpfen 21 oder 22 angeordnet ist. Dieses ist für die Identifikation mit einer elektronischen Steuerung verbunden, so dass ein automatisierter sicherer Betrieb, dem jeweils durchzuführenden Bearbeitungsverfahren entsprechend, durchgeführt werden kann. Ein sensitives Element kann z.B. ein Schaltkontakt sein. In einer einfachen Ausführung kann eine Umschaltung einer gemeinsamen Stromquelle 10 von Plasmaquelle 10.1 zu Laserlichtquelle 10.2 oder umgekehrt dabei vorgenommen werden.

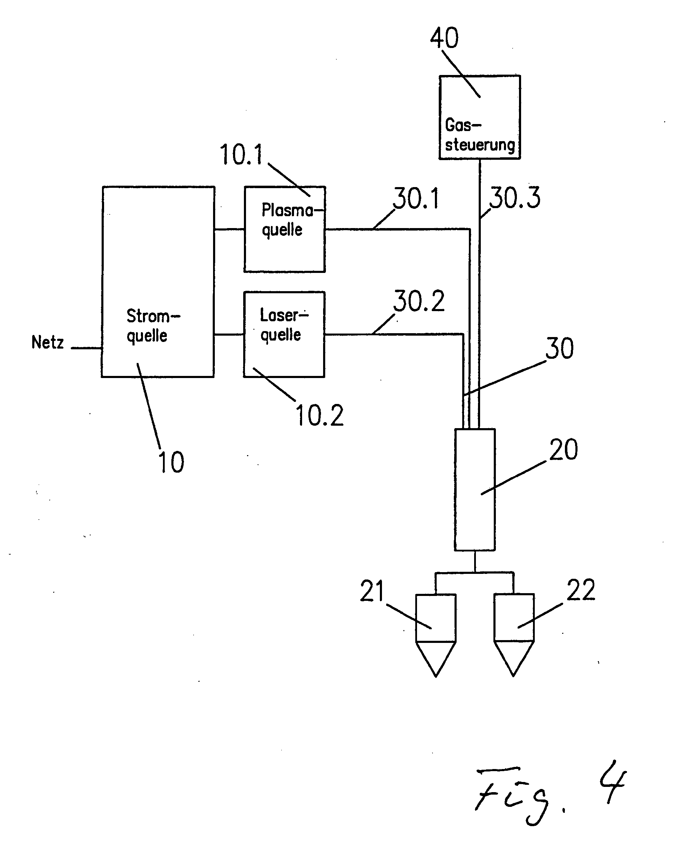

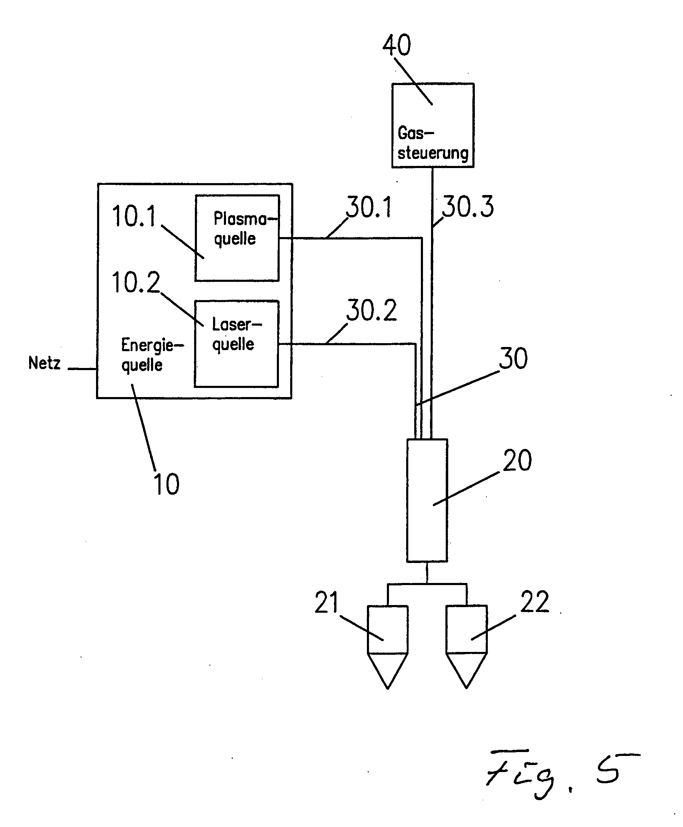

Das in Figur 4 gezeigte Beispiel unterscheidet sich vom Beispiel nach Figur 1 lediglich dadurch, dass Plasmaquelle 10.1 und Laserlichtquelle 10.2 gemeinsam an eine elektrische Stromquelle 10, mit der die Leistung beeinflusst werden kann, angeschlossen sind. Beim in Figur 5 gezeigten Beispiel sind die Plasmaquelle 10.1, die Laserlichtquelle 10. 2 und die Energiequelle 10 als integrierte Einheit ausgebildet. Die Nutzung einer gemeinsamen Stromquelle 10 bzw. Energieversorgung ist ebenfalls kostengünstig und daher vorteilhaft.

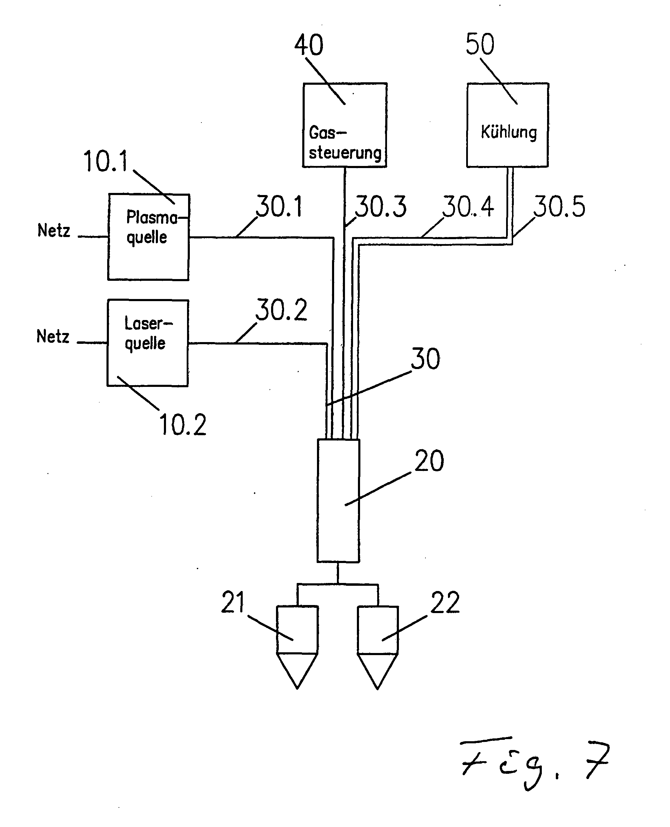

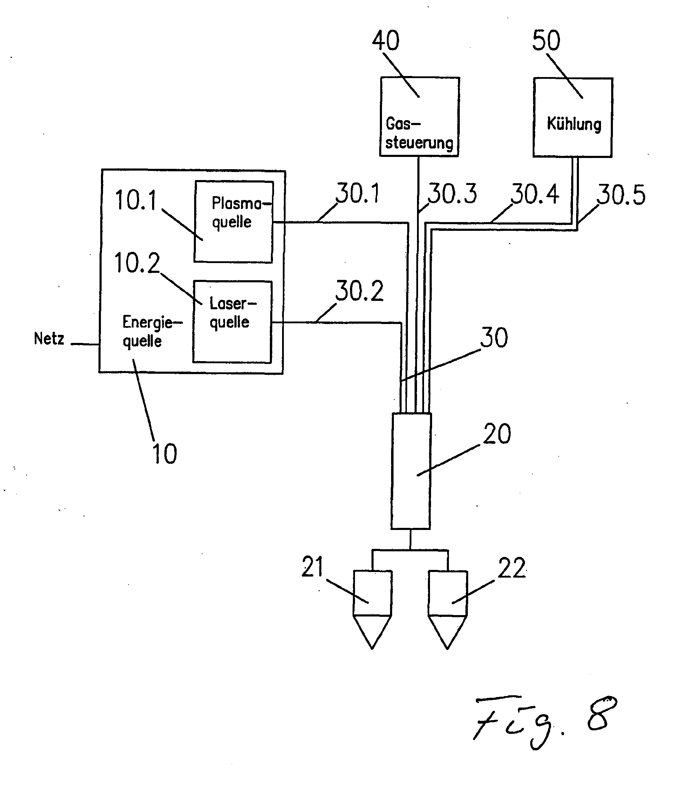

Die in den Figuren 6 bis 8 gezeigten Beispiele verfügen über eine zusätzliche Kühlung 50 mit der Zuleitung 30.4 und der Rückführleitung 30.5 für ein Kühlmittel zum Schaftelement 20 mit jeweiligem Bearbeitungskopf 21 bzw. 22 und von dort wieder zurück zur Kühlung 50. Bis auf die zusätzliche Kühlung 50 mit den Leitungen 30.4 und 30.5 entspricht das Beispiel nach Figur 6, dem in Figur 4 gezeigten Beispiel. Für das in Figur 7 gezeigte Beispiel trifft dies auf das Beispiel nach Figur 1 und für das Beispiel nach Figur 8 ist Beispiel nach Figur 5 ohne Kühlung 50 analog zu.

## Patentansprüche

1. System zur thermischen Bearbeitung von Werkstücken mit einem Plasmabearbeitungskopf (22), einem Laserbearbeitungskopf (21), einer Versorgung für elektrischen Strom (30.1), einer Versorgung für Prozessgas (30.3) und einer Laserlichtquelle (10.2), einem einzigen Schaftelement (20), bei dem System der Laserbearbeitungskopf (21) und der Plasmabearbeitungskopf (22) mit dem einzigen Schaftelement (20) verbindbar und Plasmabearbeitungskopf (22) und Laserbearbeitungskopf (21) zum trennenden Bearbeiten und/oder zum Schweißen von Werkstücken ausgebildet sind; **dadurch gekennzeichnet, dass** im Schaftelement (20) mindestens eine Zuführung (20.1) für den elektrischen Strom zu einer Elektrode im Plasmabearbeitungskopf (21), ein Lichtwellenleiter (20.2) für Laserstrahlung und eine Zuführung (20.3) für Prozessgas vorhanden sind, die mit komplementären Anschlüssen oder Elementen (21.1, 21.3, 22.2, 22.3) die am Plasmabearbeitungskopf (21) und am Laserbearbeitungskopf (22) vorhanden sind, im befestigten Zustand am Schaftelement (20) jeweils miteinander kommunizieren oder in Verbindung stehen; wobei die Zuführungen (20.1 und 20.3) an die Versorgung für elektrischen Strom (30.1), für Prozessgas (30.3) und der Lichtwellenleiter (20.2) an die Laserlichtquelle (30.2) angeschlossen sind.

2. System nach Anspruch 1, **dadurch gekennzeichnet, dass** Plasmabearbeitungskopf (21) und Laserbearbeitungskopf (22) mittels mindestens eines Schnellwechselverschlusses am Schaftelement (20) befestigbar sind.

3. System nach einem der vorhergehenden Ansprüche, **dadurch gekennzeichnet, dass** von der Laserlichtquelle (10.2) emittierte Laserstrahlung mittels Lichtwellenleiter übertragbar ist.

4. System nach einem der vorhergehenden Ansprüche, **dadurch gekennzeichnet, dass** die Laserlichtquelle (10.2) ein Faserlaser ist.

5. System nach einem der vorhergehenden Ansprüche, **dadurch gekennzeichnet, dass** durch das Schaftelement (20) eine Zuführung (20.4) und eine Rückführung (20.5) für ein Kühlmittel ausgebildet sind, die mit Kühlmittelleitungen (21.4, 21.5 und/oder 22.4 und 22.5) im Laserbearbeitungskopf (22) und/oder im Plasmabearbeitungskopf (21) verbindbar sind.

6. System nach Anspruch 5, **dadurch gekennzeichnet, dass** Zuführleitung(en) für elektrischen Strom zu einer Elektrode eines Plasmabearbeitungskopfes (21) innerhalb der Zuführung (20.4) oder Rückführung (20.5) im Schaftelement (20) und einer Kühlmittelleitung (21.4 oder 21.5) im Plasmabearbeitungskopf (21) angeordnet ist/sind.

7. System nach einem der vorhergehenden Ansprüche, **dadurch gekennzeichnet, dass** am Schaftelement (20) und/oder Plasmabearbeitungskopf (21) und Laserbearbeitungskopf (22) ein sensitives Element vorhanden ist/sind, das mit einer elektronischen Steuerung, zur Identifikation des jeweils am Schaftelement (20) befestigten Bearbeitungskopfes (21 oder 22) vorhanden ist.

8. System nach einem der vorhergehenden Anspruche, **dadurch gekennzeichnet, dass** eine Plasmaquelle (10.1) und die Laserquelle (10.2) an eine gemeinsame Stromquelle angeschlossen.

## Claims

1. A system for the thermal machining of warkpieces halving a plasma machining head (22), a laser machining head (21), a supply for electric current (30.1), a supply for process gas (30.3) and a laser light source (10.2), a single shaft element (20), in which system the laser machining head (21) and the plasma machining head (22) are connectable to the single shaft element (20) and the plasma machining head (22) and the laser machining head (21) are configured for the separating machining and/or for the welding of workpieces,
***characterized in that***
at least one feed (20.1) for the electric current to an electrode in the plasma machining head (21), an optical waveguide (20.2) for laser radilation and a feed (20.3) for process gas are present in the shaft element (20) and respectively communicate with one another or are connected to one another by complementary connections or elements (21.1, 21.3, 22.2, 22.3) which are present at the plasma machining head (21) and at the laser machining head (22) in the state fastened to the shaft element; wherein the feeds (20.1 and 20.3) are connected to the supply for electric current (30.1), for process gas (30.3) and the optical waveguide (20.2) is connected to the laser light source (30.2).

2. A system in accordance with claim 1, **characterized in that** the plasma machining head (21) and the laser processing head (22) are fastenable to the shaft element (20) by means of at least one quick-change closure.

3. A system in accordance with one of the preceding claims, **characterized in that** laser radiation emitted by the laser light source (10.2) can be transmitted by means of optical waveguides.

4. A system in accordance with one of the preceding claims, **characterized in that** the laser light source (10.2) is a fiber laser.

5. A system in accordance with one of the preceding claims, **characterized in that** a feed (20.4) and a return line (20.5) for a coolant are formed through the shaft element (20) and can be connected to cool ant lines (21.4, 21.5 and/or 22.4 and 22.5) in the laser machining head (22) and/or in the plasma machining head (21).

6. A system in accordance with claim 5, **characterized in that** a feed line/feed lines for electric current to an electrode of a plasma machining head (21) is/are arranged within the feed (20.4) or return line (20.5) in the shaft element (20) and to a coolant line (21.4 or 21.5) in the plasma machining head (21).

7. A system in accordance with one of the preceding claims, character ized in that a sensitive element is present at the shaft element (20) and/or at the plasma machining head (21) and laser machining head (22) which is connected to an electronic control for the identification of the respective machining head (21 or 22) fastened to the shaft element (20).

8. A system in accordance with one of the preceding claims, **characterized in that** a plasma source (10.1) and the laser source (10.2) are connected to a common power source.

## Revendications

1. Système de traitement thermique de pièces avec une tête de traitement au plasma (22), une tête de traitement au laser (21), une alimentation en courant électrique (30.1), un approvisionnement en gaz de process (30.3) et une source de lumière laser (10.2), avec un seul élément de tige (20), dans lequel la tête de traitement au laser (21) et la tête de traitement au plasma (22) peuvent être reliés au seul élément de tige (20) et la tête de traitement au laser (21) et la tête de traitement au plasma (22) sont conçues pour un usinage de coupe et/ou pour la soudure de pièces ; **caractérisé en ce que**, dans l'élément de tige (20), au moins un approvisionnement (20.1) en courant électrique d'une électrode dans la tête de traitement au plasma (22), un guide d'ondes optiques (20.2) pour le rayon laser et un approvisionnement (20.3) en gaz de process sont présents, qui sont munis de raccords complémentaires ou des éléments (21.1, 21.3, 22.2, 22.3) présents sur la tête de traitement au plasma (21) et sur la tête de traitement au laser (22), sont à l'état fixé sur l'élément de tige (20) et communiquent ou sont reliés entre eux; les approvisionnements (20.1 et 20.3) étant raccordés à l'alimentation en courant électrique (30.1), en gaz de process (30.3) et le guide d'ondes optiques (20.2) étant raccordé à la source de lumière laser (30.2).

2. Système selon la revendication 1, **caractérisé en ce que** la tête de traitement au plasma (21) et la tête de traitement au laser (22) peuvent être fixées à l'aide d'au moins un raccord rapide sur l'élément de tige (20).

3. Système selon l'une des revendications précédentes, **caractérisé en ce que** le rayon laser émis par la source de lumière laser (10.2) peut être transmis à l'aide de guides d'ondes optiques.

4. Système selon l'une des revendications précédentes, **caractérisé en ce que** la source de lumière laser (10.2) est un laser à fibres.

5. Système selon l'une des revendications précédentes, **caractérisé en ce que**, à travers l'élément de tige (20) sont réalisés un approvisionnement (20.4) et un retour (20.5) pour un fluide de refroidissement, qui peuvent être reliés par des conduites de fluide de refroidissement (21.4, 21.5 et/ou 22.4 et 22.5) à la tête de traitement au laser (22) et/ou dans la tête de traitement au plasma (21).

6. Système selon la revendication 5, **caractérisé en ce qu'**un (des) câbles(s) d'alimentation en courant électrique pour une électrode d'une tête de traitement au plasma (21) est/sont disposée(s) à l'intérieur de l'approvisionnement (20.4) ou du retour (20.5) dans l'élément de tige (20) et dans une conduite de fluide de refroidissement (21.4 ou 21.5) dans la tête de traitement au plasma (21).

7. Système selon l'une des revendications précédentes, **caractérisé en ce que**, sur l'élément de tige (20) et/ou sur la tête de traitement au plasma (21) et la tête de traitement au laser (22), un élément sensitif est/sont présent(s), qui est muni d'un dispositif de commande électronique pour l'identification de la tête de traitement (21 ou 22) fixé à l'élément de tige (20).

8. Système selon l'une des revendication précédentes, **caractérisé en ce qu'**une source de plasma (10.1) et la source de laser (10.2) sont raccordées à une source de courant commune.
